# FASCICULE DE BREVET EUROPEEN

(11) **EP 0 636 988 B1**
(45) Date de publication et mention de la délivrance du brevet: **27.10.1999**
(21) Numéro de dépôt: 94401597.3
(22) Date de dépôt: 11.07.1994
(51) Int. Cl.: G06F 12/08

(54) **Procédé de gestion cohérente des échanges entre des niveaux d'une hiérarchie de mémoires à au moins trois niveaux**
Kohärenter Datenaustausch, Verwaltungsverfahren zwischen den Stufen einer mindestens dreistufigen Speicherhierarchie
Method of coherent management of exchange between levels of a hierarchical memory of at least three levels

(30) Priorité: 15.07.1993 FR 9308711
(43) Date de publication de la demande: 01.02.1995
(73) Titulaire: BULL S.A., 92800 Puteaux (FR)
(72) Inventeur: Lesmanne, Sylvie, F-78340 Les Clayes Sous Bois (FR); Kaszynski, Anne, F-78660 Ablis (FR); Boudou, Alain, F-78930 Vert (FR)

(56) Documents cités:
- EP-A- 0 388 032
- EP-A- 0 434 250

## Description

La présente invention concerne un procédé de gestion cohérente des échanges entre des niveaux d'une hiérarchie de mémoires à au moins trois niveaux.

On connaît des ensembles informatiques dotés d'une hiérarchie de mémoires permettant de disposer d'un espace de mémoire aussi étendu que possible sans que la dépense totale en devienne prohibitive en particulier en prévoyant des niveaux de la hiérarchie dans lesquels les mémoires les plus rapides, de technologie plus coûteuse, sont de taille réduite, et en augmentant, selon des niveaux contigus de la hiérarchie, la dimension des mémoires en raison inverse de leur coût technologique, ou plus simplement en adoptant dans les niveaux les plus élevés de la hiérarchie des tailles de mémoires juste suffisantes pour que les informations les plus utiles puissent être atteintes avec un temps d'accès apparent moyen de l'ordre du temps de cycle de la partie la plus rapide de la hiérarchie, pour une capacité totale de la hiérarchie égale à celle du niveau de mémoire le moins élevé, généralement de la technologie la moins coûteuse mais de la plus grande taille.

Pour rappeler une terminologie usuelle, chaque niveau est divisé en mémoires elles-mêmes divisées en blocs contenant des informations identifiées par des adresses. Les adresses du niveau le moins élevé de la hiérarchie correspondent aux emplacements des informations tandis que les copies de ces informations qui sont présentes dans les blocs des autres niveaux de la hiérarchie sont associées à la même adresse mais sont disposées dans un emplacement quelconque déterminé par le processeur de gestion de la mémoire considérée.

Cette hiérarchie de mémoires pose un problème de gestion de la cohérence des copies lorsque des copies d'une même information initiale d'un bloc du niveau moins élevé peuvent exister et être modifiées dans différents blocs du niveau plus élevé de la hiérarchie.

Afin d'assurer une cohérence de la gestion des informations, il est habituel, lorsqu'une information est modifiée dans un bloc du niveau plus élevé, de procéder soit à une mise à jour soit à une invalidation de l'information contenue dans des blocs correspondants du niveau plus élevé de la hiérarchie. L'avantage de la mise à jour est d'éviter les échecs survenant lors des interrogations qui sont faites sur cette information dans les mémoires qui n'ont pas généré la modification d'information. Toutefois cette mise à jour présente l'inconvénient d'être coûteuse en temps machine puisqu'elle doit être réalisée individuellement à chaque modification et implique donc un très grand débit de messages sur les liaisons entre les mémoires. Au contraire, l'invalidation est moins coûteuse en temps machine puisqu'elle peut n'être effectuée qu'une seule fois lors de plusieurs modifications successives de l'information, mais elle réduit le taux de succès des interrogations dans les mémoires où l'information a été invalidée.

Dans les ensembles informatiques actuels le protocole de traitement, en mise à jour ou en invalidation, est prédéterminé soit par une instruction au niveau du système de gestion générale de la hiérarchie de mémoires soit par une instruction du programme d'application. Or il s'avère que selon les instants il serait préférable d'adapter le protocole de traitement aux besoins afin d'optimiser le débit des messages sur les liaisons entre les niveaux de mémoires de la hiérarchie.

Le document EP-A-0 388 032 révèle un procédé de gestion des échanges entre des niveaux d'une mémoire hiérarchique de type cache multi-niveaux en utilisant pour chaque mémoire de cache de niveaux le plus élevé, soit opération de mise à jour, soit opération d'invalidation.

Un but de l'invention, telle que revendiquée dans la revendication 1, est de proposer un procédé optimum de gestion de cohérence des échanges entre des niveaux d'une hiérarchie de mémoires comportant au moins un niveau intermédiaire de la hiérarchie relié à un niveau plus élevé de la hiérarchie et à un niveau moins élevé de la hiérarchie.

Selon l'invention le procédé de gestion cohérente consiste, lors d'une modification d'une information dans un bloc d'une mémoire du niveau plus élevé de la hiérarchie, à invalider au moins une partie des informations aux adresses correspondantes d'autre mémoires du niveau plus élevé de la hiérarchie, et à gérer une mise à jour ou une invalidation des informations aux adresses correspondantes du niveau intermédiaire et du niveau moins élevé de la hiérarchie en fonction d'une utilité de la mise à jour.

Ainsi, on minimise les échanges de messages nécessaires aux mises à jour tout en maintenant une information pertinente dans les blocs ou celle-ci pourrait être utile. Le procédé selon l'invention est particulièrement avantageux lorsque le niveau intermédiaire de la hiérarchie est relié au niveau plus élevé de la hiérarchie par une liaison à faible latence, par exemple un bus 16 octets à 50 MHz, et est relié au niveau moins élevé de la hiérarchie par des liaisons à fort débit, par exemple par liaison obtenue par deux connexions séries à 2 Giga bits/s. En effet, dans ce cas, on profite de la liaison à faible latence pour avoir un accès rapide à l'information modifiée lorsque celle-ci est nécessaire et on élimine les effets dûs au moins bon débit de cette liaison à faible latence tandis que l'on profite au contraire du débit élevé des liaisons séries pour effectuer des mises à jour qui minimiseront ultérieurement les effets de la forte latence de ces liaisons.

Selon une version avantageuse de l'invention en liaison avec un ensemble informatique dans lequel les mémoires de différents niveaux de la hiérarchie sont regroupées selon des noeuds, on met à jour les blocs à des adresses correspondantes des mémoires du niveau plus élevé de la hiérarchie du noeud auquel appartient le bloc modifié et on invalide les blocs à des adresses correspondantes des mémoires du niveau plus élevé de la hiérarchie dans d'autres noeuds.

Ainsi, on profite de la facilité d'accès à certaines mémoires de niveau plus élevé de la hiérarchie pour mettre à jour les blocs correspondants de ces mémoires tout en minimisant le flux des messages sur le reste des liaisons de l'ensemble informatique.

Selon un autre aspect de l'invention destiné à optimiser de façon encore plus poussée le gestion des échanges en liaison avec un ensemble informatique dans lequel les copies des informations détenues dans des blocs à des adresses correspondantes du niveau intermédiaire de la hiérarchie sont normalement traitées selon un protocole dans un mode de mise à jour, on associe à chaque bloc du niveau intermédiaire de la hiérarchie un bit d'utilité qui est mis dans un premier état lors d'une première copie d'information ou d'une mise à jour d'information dans ce bloc, et qui est mis dans un second état lors d'une utilisation de l'information contenue dans ce bloc, et dans lequel lors d'une modification d'une information à une adresse du niveau moins élevé de la hiérarchie, on effectue une mise à jour des blocs à l'adresse correspondante du niveau intermédiaire de la hiérarchie et on maintient le protocole de traitement dans le mode de mise à jour ou on le commande dans un mode d'invalidation en fonction d'une utilité d'une mise à jour précédente à cette adresse, cette utilité d'une mise à jour précédente étant déterminée en fonction de l'état dans lequel se trouvent les bits d'utilité des blocs de même adresse juste avant la mise à jour considérée.

Ainsi, lorsque l'état des bits d'utilité démontre que les mises à jour effectuées précédemment ont été inutiles par suite d'une absence d'utilisation de l'information mise à jour, on fait passer le protocole de traitement de l'adresse correspondante en mode d'invalidation et on économise ainsi des mises à jour lors des modifications ultérieures.

Selon une première mise en oeuvre de cet aspect de l'invention, on mémorise au niveau moins élevé un seuil de mise à jour et, on maintient le protocole dans le mode de mise à jour lorsqu'un pourcentage des bits d'utilité dans le second état est au moins égal au seuil de mise à jour, et on commande le protocole dans le mode d'invalidation lorsque le pourcentage des bits d'utilité dans le second état est inférieur au seuil de mise à jour.

Selon une seconde mise en oeuvre de cet aspect de l'invention on mémorise au niveau moins élevé de la hiérarchie un premier seuil et un second seuil et on maintient le protocole de traitement dans le mode de mise à jour ou on le commande dans un mode d'invalidation en fonction d'un nombre réel de bits d'utilité dans le premier et le second état par comparaison au premier et au second seuil.

En particulier on commande le protocole dans le mode d'invalidation lorsque le nombre de bits d'utilité dans le second état est inférieur au second seuil.

De préférence, lorsque les nombres de bits d'utilité dans le premier et le second état sont respectivement supérieurs au premier et au second seuil on effectue ponctuellement une invalidation des informations dans les blocs du niveau plus élevés de la hiérarchie tout en maintenant le protocole dans un mode de mise à jour.

Selon encore un autre aspect de l'invention, on associe à chaque adresse du niveau moins élevé de la hiérarchie un code qui évolue en fonction d'une utilité d'une mise à jour lorsque les copies des informations contenues dans les blocs du niveau intermédiaire de la hiérarchie sont traitées selon un protocole dans un mode de mise à jour, ou en fonction d'une nature d'un échec lorsque les copies des informations contenues dans les blocs du niveau intermédiaire de la hiérarchie sont traitées selon un protocole dans un mode d'invalidation, l'utilité d'une mise à jour étant déterminée en fonction de l'état dans lequel se trouvent les bits d'utilité, et la nature d'un échec étant déterminée par une absence totale d'information et d'adresse dans la mémoire du niveau intermédiaire de la hiérarchie ou par une information invalide dans un bloc de cette mémoire, et on fait évoluer le mode du protocole en fonction du code de l'adresse considérée du niveau moins élevé de la hiérarchie. Ainsi on procède à une analyse très fine de la situation réelle et l'on peut non seulement passer du mode de mise à jour au mode d'invalidation mais également revenir au mode de mise à jour lorsque cela s'avère utile en fonction de la nature des échecs.

Bien entendu pour déterminer l'utilité de la mise à jour on peut utiliser l'un des modes de mise en oeuvre décrits ci-dessous.

D'autres caractéristiques et avantages de l'invention apparaîtront encore à la lecture de la description qui suit de versions préférées de l'invention en relation avec les figures ci-jointes parmi lesquelles :
- la figure 1 est un diagramme schématique illustrant le procédé selon l'invention, en relation avec une hiérarchie de mémoires à trois niveaux,
- la figure 2 est un tableau illustrant le second mode de mise en oeuvre de la première version de l'invention,
- la figure 3 est un diagramme schématique illustrant la stratégie de mise à jour et d'invalidation dans le cas d'une analyse fine de la situation.

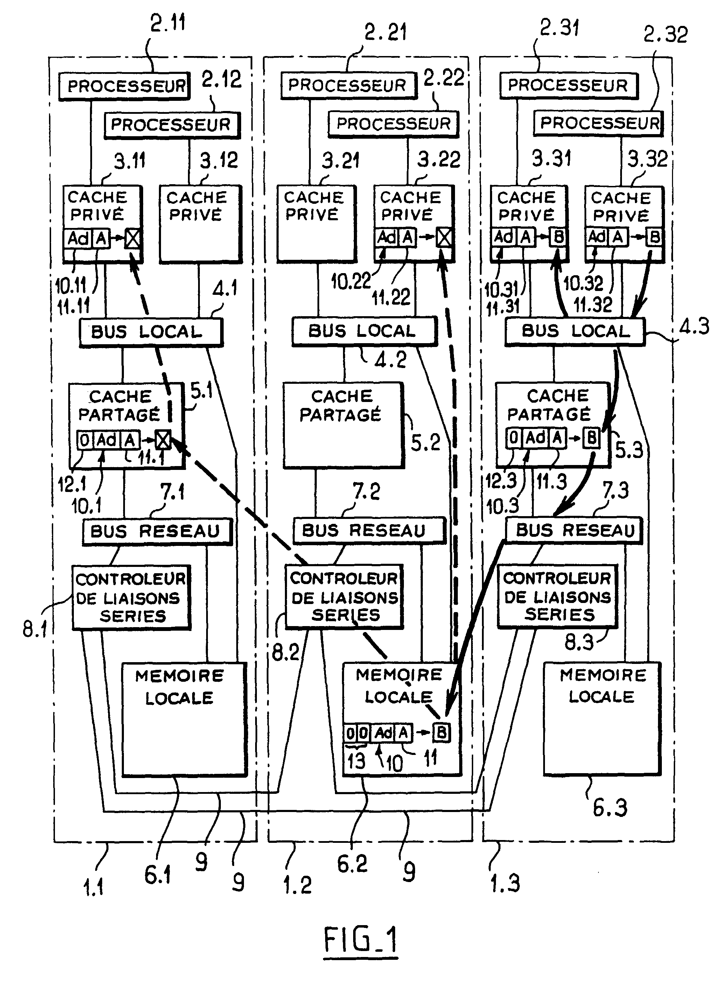

En référence à la figure 1 le procédé selon l'invention va être décrit en relation avec un ensemble informatique à mémoire partagée, c'est-à-dire un ensemble dans lequel la mémoire générale à laquelle tous les processeurs doivent pouvoir avoir accès est répartie selon des mémoires locales auxquelles chacun des processeurs peut avoir accès de façon directe ou indirecte. Dans le mode de réalisation qui va être décrit, les processeurs et les mémoires sont en outre regroupés selon des noeuds associés entre eux par des liaisons.

L'ensemble informatique illustré comporte trois noeuds symbolisés par un rectangle en trait fin mixte et portant la référence générale 1. Pour permettre une identification particulière des noeuds la référence générale est associée à une référence particulière 1, 2 ou 3 de sorte que la référence complète de chaque noeud apparaît respectivement 1.1, 1.2 et 1.3.

Pour les besoins de la description on a illustré trois noeuds mais l'invention n'est pas limitée à ce nombre. Au contraire, le procédé selon l'invention qui va être exposé ci-dessous permet de réaliser un ensemble avec un très grand nombre de noeuds regroupant chacun un nombre de processeurs qui n'est pas limité au nombre illustré, et cela en obtenant des performances en augmentation de façon sensiblement proportionnelle au nombre total de processeurs alors qu'en mettant en oeuvre les procédés traditionnels les performances se trouvent rapidement limitées en dépit d'une augmentation du nombre de processeurs.

En référence à la figure 1, chaque noeud 1 comporte deux processeurs d'instructions portant la référence générale 2 à laquelle est associée une référence particulière à deux chiffres permettant d'identifier un processeur par le noeud auquel il appartient (premier chiffre de la référence particulière), et par un numéro d'ordre au sein du noeud (second chiffre de la référence particulière). Ainsi, les différents processeurs portent les références complètes 2.11 et 2.12 pour le noeud 1.1 ; 2.21 et 2.22 pour le noeud 1.2 ; et 2.31 et 2.32 pour le noeud 1.3.

Chaque processeur est directement relié à une mémoire qui sera par la suite dénommée cache privé ou mémoire du niveau plus élevé de la hiérarchie. On sait que le terme cache est utilisé de façon habituelle pour désigner une mémoire comprenant des blocs dans lesquels sont copiées des informations détenues à une adresse de la mémoire générale de l'ensemble informatique afin qu'un processeur d'instructions particulier puisse utiliser cette information de façon plus rapide que s'il devait interroger systématiquement la mémoire générale à chaque fois qu'il exécute une instruction mettant en oeuvre cette information. Au sens de la présente description, le terme de cache privé, ou mémoire de niveau plus élevé de la hiérarchie, sera utilisé pour un cache auquel un processeur d'instructions est relié de façon directe. Les caches privés portent la référence générale 3 et par analogie avec les processeurs auxquels ils sont associés, ils portent les références particulières 3.11 et 3.12 pour le noeud 1.1 ; ; 3.21 et 3.22 pour le noeud 1.2 3.31 et 3.32 pour le noeud 1.3.

Les caches privés 3 sont reliés au sein de chaque noeud à un bus parallèle portant la référence générale 4 à laquelle est associée une référence particulière l'identifiant par rapport au noeud de sorte que les bus 4 portent respectivement les références complètes 4.1, 4.2 et 4.3. Il en sera de même par la suite de tous les éléments d'un noeud. Les bus 4 seront par la suite dénommés bus locaux pour montrer qu'ils assurent une liaison purement interne à un noeud. Les bus locaux 4 sont des bus à faible latence, par exemple des bus 16 octets à 50 MHz.

Chaque bus local est relié à un cache qui sera par la suite dénommé cache partagé. Les caches partagés constituent des mémoires d'un niveau intermédiaire de la hiérarchie et portent la référence générale 5 et respectivement les références complètes 5.1, 5.2 et 5.3. Chaque bus local est également relié à une partie de la mémoire générale de l'ensemble informatique. Chaque partie de la mémoire générale sera par la suite dénommée mémoire locale pour illustrer sa position au sein d'un noeud. Les mémoires locales portent la référence numérique générale 6 et respectivement les références complètes 6.1, 6.2 et 6.3.

Dans le mode de réalisation préféré illustré, les caches partagés 5 et les mémoires locales 6 reliés à des bus parallèles 7, respectivement 7.1, 7.2 et 7.3. Les bus parallèles 7 seront par la suite dénommés bus réseaux. Chaque bus réseau est associé à un contrôleur de liaisons séries 8, respectivement 8.1, 8.2 et 8.3 qui forme un interface avec des liaisons séries 9, qui assurent une liaison entre les noeuds.

Des processeurs de gestion sont associés à chacune des mémoires des différents niveaux mais n'ont pas été représentés pour ne pas surcharger la figure. Les dénominations de : niveau plus élevé de la hiérarchie, niveau intermédiaire de la hiérarchie et moins élevé de la hiérarchie n'ont aucun rapport avec une disposition géographique du niveau dans la hiérarchie de mémoires, mais sont significatives d'une relation plus ou moins directe avec les processeurs d'instructions. En particulier, les mémoires locales 6 seront de préférence disposées physiquement de façon adjacente aux caches partagés 5. A ce propos on notera qu'en dépit de la liaison directe entre une mémoire locale 6 et le bus local correspondant 4 au sein d'un noeud, la mémoire locale constitue une mémoire de niveau moins élevé au sens de l'invention. Pour accéder simultanément à des informations différentes au sein d'un même noeud on pourra en effet être amené à copier dans le cache partagé d'un noeud, par exemple dans le cache partagé 5.2, des informations qui sont contenues dans la mémoire locale du même noeud, c'est-à-dire la mémoire locale 6.2 dans l'exemple considéré. On remarquera que dans ce cas les copies contenues dans le cache partagé 5.2 seront considérées comme des copies dans une mémoire de niveau intermédiaire de la hiérarchie au même titre que les copies réalisées à partir des mémoires locales des autres noeuds bien qu'un processeur du noeud 1.2 puisse avoir accès à l'information directement dans la mémoire locale.

En règle générale, les mémoires locales 6 du niveau moins élevé de la hiérarchie sont des mémoires à technologie peu coûteuse et à grande capacité tandis que les caches privés 3 du niveau plus élevé de la hiérarchie sont des mémoires à technologie plus coûteuse, d'un accès très rapide mais d'une dimension relativement beaucoup plus faible que la dimension des mémoires 6 afin de ne pas augmenter le coût de façon indue.

En fonctionnement, des informations initialement contenues dans une mémoire 6, par exemple une information contenue dans un bloc 10 et illustrée par une série de bits 11 associée à une adresse Ad, sont progressivement copiées dans des blocs correspondants, (respectivement 10.1, 10.3 ; 10.11, 10.22, 10.31 et 10.32)) des niveaux plus élevés de la hiérarchie et associés à la même adresse Ad au fur et à mesure des demandes par les processeurs d'instructions afin d'être immédiatement disponibles pour les processeurs d'instructions. Dans l'exemple illustré, l'information A a ainsi été copiée dans les mémoires les blocs 10.1 et 10.3 des caches partagés correspondants, respectivement 5.1 et 5.3 du niveau intermédiaire de la hiérarchie, puis dans les blocs 10.11, 10.31 et 10.32 des caches privés, respectivement 3.11, 3.31 et 3.32 du niveau plus élevé de la hiérarchie. En ce qui concerne la copie dans le bloc 10.22 du cache privé 3.22, celle-ci peut être effectuée directement puisque le cache privé 3.22 a un accès direct à la mémoire locale 6.2 qui se trouve dans le même noeud. Les processeurs d'instructions 2.11, 2.22, 2.31 et 2.32 travaillent donc de façon autonome sur la même information et, lorsqu'une information est modifiée au niveau plus élevé de la hiérarchie, par exemple dans le bloc 10.32 où l'information a été modifiée de A en B, il est a priori souhaitable de mettre à jour l'information au niveau moins élevé de la hiérarchie c'est-à-dire dans la mémoire locale 6.2 comme illustré par les flèches descendantes en trait épais. On pourrait également mettre à jour systématiquement les blocs de toutes les autres mémoires 3. Toutefois, si chaque fois que l'un des processeurs d'instructions 2 modifie l'information, une mise à jour est effectuée dans toutes les autres mémoires du niveau plus élevé de la hiérarchie, il en résulte un débit très important de messages de mise à jour sur les liaisons, ce qui risque de provoquer une attente pour les processeurs d'instructions.

Si au contraire une invalidation est effectuée dans toutes les mémoires 3, les interrogations ultérieures par les processeurs d'instructions 2 conduiront à des échecs qui ralentiront également le fonctionnement des processeurs d'instructions.

Selon l'invention on invalide au moins une partie des informations aux adresses correspondantes d'autres mémoires du niveau plus élevé de la hiérarchie et on gère une mise à jour ou une invalidation des informations aux adresses correspondantes du niveau intermédiaire et du niveau moins élevé de la hiérarchie en fonction d'une utilité de la mise à jour.

En particulier, selon le mode d'exécution préféré illustré par la figure 1 on met à jour les blocs a des adresses correspondantes des mémoires 3 du niveau plus élevé de la hiérarchie du noeud auquel appartient le bloc modifié tandis que les blocs à des adresses correspondantes des mémoires du niveau plus élevé de la hiérarchie des autres noeuds sont invalidés. Dans l'exemple illustré on a supposé que la modification provenait du processeur 2.32 et était donc effectuée en premier lieu dans le cache privé 3.32. Selon l'invention on a donc mis à jour l'information dans le bloc 10.31 du cache privé 3.31 tandis que les informations contenues dans les blocs 10.11 du cache privé 3.11 et 10.22 du cache privé 3.22 ont été invalidées.

On remarquera que la mise à jour du bloc 10.1 du cache partagé 5.1 n'est pas forcément utile si l'information A, bien qu'ayant été copiée précédemment pour être utilisée par le processeur 2.11, n'est plus utilisée par celui-ci et ne fait donc plus l'objet d'interrogations.

Selon un aspect avantageux de l'invention on adapte le mode de traitement en fonction de l'utilité des mises à jour. Pour cela, selon une première version de l'invention, les copies des informations détenues dans les blocs des mémoires 5 sont normalement traitées selon un protocole dans un mode de mise à jour et on associe à chaque bloc du niveau intermédiaire de la hiérarchie un bit d'utilité 12, respectivement 12.1 pour le bloc 10.1, et 12.3 pour le bloc 10.3. Le bit d'utilité 9 est mis dans un premier état lors d'une première copie ou d'une mise à jour de l'information associée à cette adresse, par exemple à l'état 0 comme illustré sur la figure 1, et est mis dans un second état, par exemple à l'état 1, lors d'une interrogation sur l'information associée à cette adresse. En pratique, lorsqu'une mise à jour est effectuée par le processeur de gestion de la mémoire 6.2 du niveau moins élevé de la hiérarchie, un acquittement est donné par le bloc où la mise à jour vient d'être effectuée, et il est donc aisé d'inclure dans le message d'acquittement, une indication sur l'état du bit d'utilité juste avant la mise à jour. Cet état du bit d'utilité est donc significatif de l'utilité de la mise à jour précédente pour ce bloc. En effet, si l'adresse a été consultée depuis la mise à jour précédente le bit d'utilité du bloc sera passé à 1 tandis que si l'adresse n'a pas été consultée, le bit d'utilité du bloc sera resté à O.

L'exploitation de cette indication peut être faite de différentes façon notamment en fonction du nombre de blocs du niveau intermédiaire de la hiérarchie qui sont reliés à chaque bloc du niveau moins élevé de la hiérarchie ou en fonction du degré de partage prévisible des informations entre les différents processeurs d'instructions. De préférence, le mode de fonctionnement du protocole ne sera pas modifié en considération de l'utilité d'une mise à jour sur un seul bloc mais plutôt en considération de l'utilité d'une mise à jour selon l'ensemble des blocs du niveau intermédiaire ayant une même adresse.

En particulier, selon une première mise en oeuvre de cette version de l'invention, on mémorise, par exemple dans un répertoire (non représenté) associé au processeur de gestion de la mémoire 6.2 de niveau moins élevé de la hiérarchie, un seuil de mise à jour, et, après chaque mise à jour, on compare le pourcentage des bits d'utilité dans le second état au seuil de mise à jour et on commande le protocole de traitement en mode d'invalidation pour tous les blocs de même adresse du niveau intermédiaire de la hiérarchie lorsque le pourcentage des bits d'utilité dans le second état est inférieur au seuil de mise à jour, ou on maintient le protocole de traitement dans le mode de mise à jour du niveau plus élevé de la hiérarchie lorsque le pourcentage des bits d'utilité dans le second état est au moins égal au seuil de mise à jour.

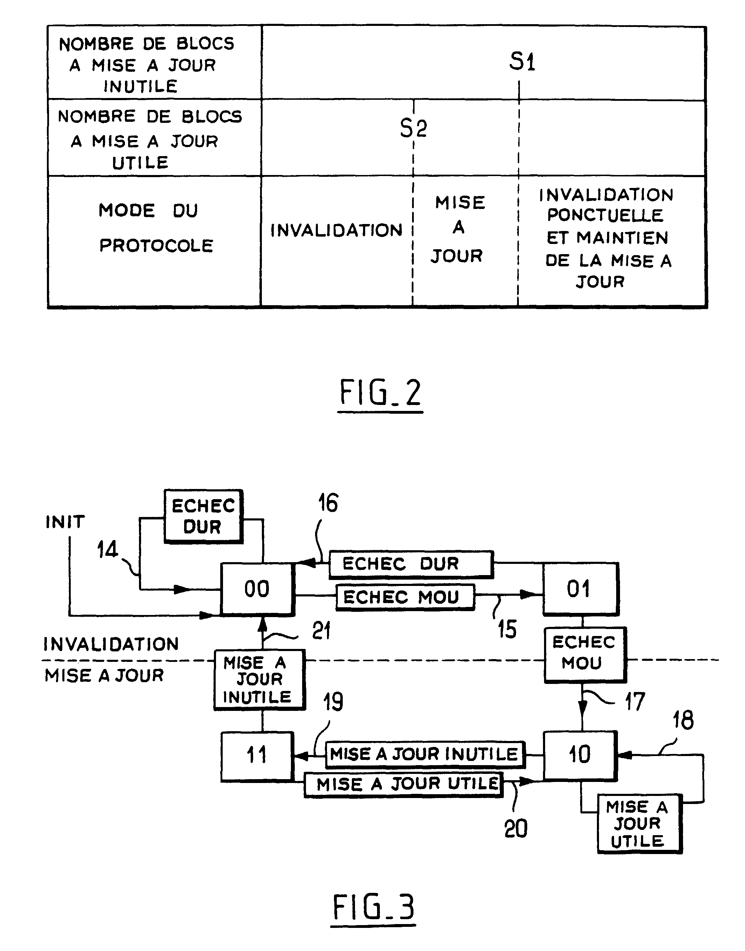

Selon une seconde mise en oeuvre de cette version de l'invention qui est illustrée par le tableau de la figure 2 on ne considère plus le pourcentage des bits d'utilité dans le second état mais le nombre de bits dans chacun des états et l'on mémorise cette fois deux seuils. Le nombre de bits d'utilité dans le premier état, c'est à dire le nombre des bits d'utilité associés à des blocs qui n'ont pas été consultés depuis la mise à jour précédente et pour lesquels cette mise à jour a donc été inutile, est comparé à un premier seuil S1. Le nombre de bits d'utilité dans le second état, c'est à dire le nombre des bits d'utilité associés à des blocs ayant la même adresse et qui ont été consultés par le processeur d'instruction auquel la mémoire est reliée de sorte que la mise à jour précédente a été utile, est comparé à un second seuil S2, de préférence supérieur au premier seuil S1.

Le mode de traitement du protocole est maintenu en mise à jour ou passé en invalidation selon le résultat de ces comparaisons. Selon le mode de mise en oeuvre préféré illustré sur la figure 2 le passage au mode d'invalidation est commandé dès que le nombre de bits d'utilité dans le second état est inférieur au second seuil S2, quelque soit le nombre de bits d'utilité dans le premier état. Lorsque l'on est dans une situation où le nombre de bits d'utilité dans le second état est supérieur au second seuil S2 et le nombre de bits d'utilité dans le premier état est simultanément inférieur au premier seuil S1, le protocole est maintenu dans le mode de mise à jour. Si le nombre de bits d'utilité dans le second état est supérieur au second seuil, et si le nombre de bits d'utilité dans le premier état est également supérieur à son seuil S1, le protocole est encore maintenu dans le mode de mise à jour mais une invalidation est effectuée ponctuellement afin de débarrasser les mémoires du grand nombre de copies qui sont apparemment inutiles et qui n'ont donc pas lieu d'être mises à jour si elles ne sont pas redemandées par le processeur d'instructions correspondant avant la prochaine mise à jour. On notera à ce propos que dans le mode de mise à jour le protocole ne met de toutes façons à jour que les copies pour lesquelles il existe au niveau intermédiaire de la hiérarchie un bloc ayant la même adresse que le bloc du niveau moins élevé qui fait l'objet d'une modification.

La version de l'invention qui vient d'être décrite par ses deux modes de mise en oeuvre particuliers a un fonctionnement statistique qui diminue effectivement le débit des messages de mise à jour si un grand nombre de processeurs n'utilisent une information qu'un nombre limité de fois, mais accroît le taux d'échecs des interrogations au niveau intermédiaire si un nombre limité de processeurs utilisent fréquemment l'information alors qu'un grand nombre de processeurs l'utilisent peu fréquemment. Après être passé en mode d'invalidation, il est donc préférable de pouvoir revenir à un mode de mise à jour si cela s'avère utile.

Pour cela, selon une seconde version de l'invention, on associe à chaque adresse du niveau moins élevé un code qui évolue comme il va être expliqué ci-après, en fonction d'une utilité des mises à jour lorsque le protocole est en mode de mise à jour, et en fonction de la nature des échecs lorsque le protocole est en mode d'invalidation.

Pour la mise en oeuvre de cette seconde version de l'invention, on fait évoluer le mode du protocole en fonction du code de l'adresse considérée au niveau moins élevé de la hiérarchie.

En référence à la figure 1, chaque bloc 10 du niveau moins élevé comporte une zone 13 comprenant deux bits formant un code. On a illustré sur la figure 3 un exemple d'évolution de ce code et du choix du mode de fonctionnement correspondant du protocole. On a fait figurer sur la figure 3, les différentes valeurs possibles pour les deux bits du code associé à une adresse du niveau moins élevé. Ces valeurs sont divisées en deux groupes séparés par une ligne pointillée. Les valeurs au-dessus de la ligne pointillée correspondent à un protocole en mode d'invalidation et les valeurs en-dessous de la ligne pointillée correspondent à un protocole en mode de mise à jour.

Pour illustrer l'évolution de la valeur du code et ses conséquences sur le mode du protocole, on supposera que lorsqu'une information détenue dans un bloc 10 d'une mémoire 6 du niveau moins élevé n'a pas encore été copiée, les deux bits du code sont à zéro et le protocole des relations avec les mémoires du niveau intermédiaire est en mode d'invalidation.

A partir de cette situation un processeur d'instructions, par exemple le processeur 2.11 ayant besoin de l'information à l'adresse Ad en fera la demande au cache privé 3.11 qui ne disposant pas de l'information en fera lui-même la demande au cache partagé 5.1 (on supposera à ce propos que l'information demandée n'est pas contenue dans la mémoire locale 6.1 mais dans la mémoire locale d'un autre noeud, par exemple la mémoire locale 6.2 dans le cas illustré). Le cache partagé 5.1 ne disposant pas de l'information, le processeur de gestion de la mémoire 5.1 devra alors demander l'information à la mémoire 6.2 par l'intermédiaire du bus réseau 7.1, du contrôleur de liaison séries 8.1, de la ligne série 9 qui le relie au contrôleur de liaison séries 8.2, et du bus réseau 7.2. Lors de cette interrogation le processeur de gestion du cache partagé 5.1 signale au processeur de gestion de la mémoire locale 6.2 que non seulement l'information est manquante dans le cache partagé 5.1 mais également qu'aucun bloc ne contient l'adresse Ad. Cette situation sera par la suite dénommée un échec dur, et est symbolisée par la flèche 14 sur la figure 3, c'est à dire que l'état correspondant mémorisé dans le code de la zone 13 du bloc 10 restera à la valeur 00 et le protocole des relations pour l'adresse Ad entre la mémoire 6.2 et les mémoires 5 restera en mode d'invalidation. Si cette information est très peu utilisée, le processeur de gestion du cache partagé 5.1 effectuera plus tard un effacement de l'adresse de sorte que si par la suite une nouvelle interrogation est effectuée sur cette information par le processeur 2.11, la situation sera à nouveau celle d'un échec dur. Il en sera de même chaque fois qu'un nouveau processeur demandera une copie de l'information.

On supposera maintenant que l'information a été successivement copiée dans deux blocs 10.1 et 10.3 du niveau intermédiaire et que l'un des processeurs, par exemple 2.32 comme illustré sur la figure 1 modifie l'information qui passe de A à B. Selon un protocole de relation descendantes, l'information de base dans le bloc 10 est également modifiée mais le code du bloc 10 étant resté à 00, le protocole des relations montantes, c'est à dire dans le sens de la mémoire 6.2 vers les mémoires 5 est resté en mode d'invalidation et l'information du bloc 10.1 est simplement invalidée tandis l'adresse Ad est maintenue dans le bloc 10.1.

Dans cette situation si l'information est demandée par le processeur 2.11, le processeur de gestion de la mémoire 5.1 constatera la présence de l'adresse mais ne pourra pas donner l'information associée qui est invalidée. Il sera donc nécessaire d'interroger à nouveau la mémoire 6.2 pour avoir l'information à jour, mais cette interrogation sera effectuée en précisant que l'adresse Ad est toujours existante dans le bloc 10.1. Cette situation sera par la suite dénommée échec mou et l'un des bits d'état du code sera modifié pour que le code prenne la valeur 01 comme figuré par la flèche 15 sur la figure 3. On constate sur la figure 3 que pour ce code le protocole des relations pour l'adresse Ad dans le sens de la mémoire 6.2 vers les mémoires 5 reste en mode d'invalidation de sorte qu'une interrogation ultérieure du bloc 10.1 après une modification de l'information par un autre processeur que le processeur 2.11 correspondra à nouveau à un échec mou si l'adresse 10.1 a été maintenue, et à un échec dur si l'adresse 10.1 a été supprimée dans l'intervalle. La situation correspondant à un échec dur est illustrée par la flèche 16 sur la figure 3 c'est à dire que le code dans le bloc 10 revient à la valeur 00.

Au contraire un échec mou est illustré par la flèche 17 sur la figure 3. Un échec mou à partir d'un code de valeur 01 amène donc celui-ci à la valeur 10 et le protocole des relations montantes associée à l'adresse Ad change alors de mode pour passer dans le mode de mise à jour.

Des modifications ultérieures de l'information par l'un des processeurs d'instructions 2 seront donc suivies au niveau intermédiaire de la hiérarchie par des mises à jour dans chacune des mémoires 5 et les interrogations faites auprès des caches partagés 5 seront donc des succès et non des échecs. A partir de cette situation la question qui se pose est alors de savoir s'il reste utile d'effectuer des mises à jour. Les échecs qui pourraient survenir de la part de processeurs demandant l'information pour la première fois ne sont plus pris en compte et l'on applique alors les critères d'utilité de mise à jour qui ont été décrits en relation avec la première version de l'invention, c'est à dire qu'à chaque mise à jour d'un bloc d'une mémoire 5 le signal d'acquittement transmet l'état du bit d'utilité 12. Pour chaque adresse, le processeur de gestion de la mémoire 6 analyse l'état de l'ensemble des bits d'utilité selon l'un des modes de mise en oeuvre décrits ci-dessus et en déduit l'utilité globale de la mise à jour.

Si la mise à jour correspondant à l'état des bits d'utilité a été utile la valeur du code est maintenue à 10 comme illustré par la flèche 18 sur la figure 3 et le protocole des relations montantes reste bien entendu inchangé. Si la mise à jour a été globalement inutile la valeur du code est modifiée en 11 comme illustré par la flèche 18 sur la figure 3.

Si à la mise à jour suivante les bits d'utilité ont évolué et traduisent une mise à jour utile le code est ramené à la valeur 10 comme illustré par la flèche 20 sur la figure 3. Si au contraire, à partir d'un code de valeur 11 on constate lors de la mise à jour suivante que les bits d'utilité n'ont pas évolué dans un sens favorable de sorte que la mise à jour immédiatement précédente a été inutile, le code prend la valeur 00 comme illustré par la flèche 21 sur la figure 3 et le protocole des relations montantes est ramené à un mode d'invalidation. On est alors à nouveau dans la situation décrite ci-dessus.

On constate que cette seconde version de l'invention permet de faire passer le protocole des relations montantes d'un mode à l'autre sans toutefois que le changement de mode ne soit trop fréquent, ce qui permet donc d'optimiser le flux de messages sur les liaisons entre les mémoires.

On notera que l'initialisation n'est pas nécessairement faite avec le code 00. On peut au contraire prévoir de la faire avec un autre code, l'évolution s'effectuant alors à partir de ce code selon le mécanisme décrit ci-dessus.

On notera également que des adresses distinctes peuvent être dans des modes distincts en fonction de la situation des copies en relation avec l'information associée à l'adresse considérée.

Bien entendu l'invention n'est pas limitée aux versions de l'invention décrites ci-dessus et on peut y apporter des variantes de réalisation sans sortir du cadre de l'invention telle que définie par les revendications.

En particulier, au sein d'un noeud on peut considérer soit que le cache partagé peut servir de niveau intermédiaire vis à vis de la mémoire locale du même noeud soit au contraire considérer que les caches privés peuvent être assimilés à un niveau intermédiaire de la hiérarchie. Dans ce cas, pour les adresses de la mémoire locale du noeud on peut prévoir d'associer un bit d'utilité aux blocs correspondants des caches privés de ce noeud et effectuer une mise à jour ou une invalidation dans les caches privés du noeud en fonction de l'état de ces bits d'utilité.

A l'inverse si l'information détenue initialement dans l'une des mémoires locales est utilisée et modifiée exclusivement par l'un des processeurs, le processeur de gestion de la mémoire locale peut informer le cache privé correspondant au processeur qu'il est le seul à détenir l'information et qu'il n'est pas nécessaire de faire redescendre les modifications successives vers la mémoire locale qui se contente d'invalider l'information jusqu'à ce que celle-ci soit redemandée par un autre processeur.

Bien que l'invention ait été décrite en liaison avec un ensemble informatique dans lequel la mémoire locale est directement reliée au bus local au sein de chaque noeud, elle s'applique également à des mémoires pour lesquelles le niveau inférieur de la hiérarchie est exclusivement relié au niveau intermédiaire de la hiérarchie.

On peut également prévoir différentes stratégies d'évolution entre le mode de mise à jour et le mode d'invalidation, par exemple en augmentant le nombre de valeurs possibles pour le code associé à chaque adresse des mémoires 6. Il faut toutefois veiller à ce que la stratégie ne devienne pas trop complexe et ne complique pas trop le fonctionnement du processeur de gestion des mémoires qui ne pourrait plus satisfaire la demande et provoquerait à son tour une attente.

## Revendications

1. Procédé de gestion cohérente des échanges entre des niveaux d'une hiérarchie de mémoires comportant au moins un niveau intermédiaire de la hiérarchie, relié à un niveau plus élevé de la hiérarchie et à un niveau moins élevé de la hiérarchie, chaque niveau de la hiérarchie étant divisé en mémoires (3, 5, 6) elles-mêmes divisées en blocs (10) contenant des informations (11) associées à des adresses (Ad), les blocs des mémoires du niveau plus élevé et du niveau intermédiaire de la hiérarchie contenant des copies des informations détenues dans des blocs à des adresses correspondantes du niveau moins élevé de la hiérarchie, caractérisé en ce que, lors d'une modification d'une information dans un bloc (10.32) d'une mémoire du niveau plus élevé de la hiérarchie, on invalide au moins une partie des informations aux adresses correspondantes d'autres mémoires du niveau plus élevé de la hiérarchie, et on gère une mise à jour ou une invalidation des informations aux adresses correspondantes des mémoires du niveau intermédiaire et du niveau moins élevé de la hiérarchie en fonction d'une utilité de la mise à jour.

2. Procédé selon la revendication 1 en liaison avec un ensemble informatique dans lequel les mémoires de différents niveaux de la hiérarchie sont regroupées selon des noeuds, caractérisé en ce que lors d'une modification d'une information dans un bloc (10.32) d'une mémoire du niveau plus élevé de la hiérarchie, on met à jour les blocs (10.31) à des adresses correspondantes des mémoires du niveau plus élevé de la hiérarchie du noeud (1.3) auquel appartient le bloc modifié et on invalide les blocs (10.11 ; 10.22) à des adresses correspondantes des mémoires du niveau plus élevé de la hiérarchie dans d'autres noeuds (1.1, 1.2).

3. Procédé selon la revendication 1 ou la revendication 2, dans lequel les copies des informations détenues dans des blocs à des adresses correspondantes du niveau intermédiaire de la hiérarchie sont normalement traitées selon un protocole dans un mode de mise à jour, caractérisé en ce qu'on associe à chaque bloc du niveau intermédiaire de la hiérarchie un bit d'utilité (12) qui est mis dans un premier état lors d'une première copie d'information ou d'une mise à jour d'information dans ce bloc, et qui est mis dans un second état lors d'une utilisation de l'information contenue dans ce bloc, et en ce que lors d'une modification d'une information à une adresse du niveau moins élevé de la hiérarchie, on effectue une mise à jour des blocs à l'adresse correspondante du niveau intermédiaire de la hiérarchie et on maintient le protocole de traitement dans le mode de mise à jour ou on le commande dans un mode d'invalidation en fonction d'une utilité d'une mise à jour précédente à cette adresse, cette utilité d'une mise à jour précédente étant déterminée en fonction de l'état dans lequel se trouvent les bits d'utilité des blocs de même adresse juste avant la mise à jour considérée.

4. Procédé selon la revendication 3, caractérisé en ce qu'on mémorise au niveau moins élevé un seuil de mise à jour et en ce qu'on maintient le protocole dans le mode de mise à jour lorsqu'un pourcentage des bits d'utilité dans le second état est au moins égal au seuil de mise à jour, et on commande le protocole dans le mode d'invalidation lorsque le pourcentage des bits d'utilité dans le second état est inférieur au seuil de mise à jour.

5. Procédé selon la revendication 3, caractérisé en ce qu'on mémorise au niveau moins élevé de la hiérarchie un premier seuil et un second seuil et on maintient le protocole de traitement dans le mode de mise à jour ou on le commande dans un mode d'invalidation en fonction d'un nombre réel de bits d'utilité dans le premier et le second état par comparaison au premier et au second seuil.

6. Procédé selon la revendication 5, caractérisé en ce qu'on commande le protocole dans le mode d'invalidation lorsque le nombre de bits d'utilité dans le second état est inférieur au second seuil.

7. Procédé selon la revendication 6, caractérisé en ce que lorsque les nombres de bits d'utilité dans le premier et le second état sont respectivement supérieurs au premier et au second seuil on effectue ponctuellement une invalidation des informations dans les blocs du niveau plus élevé de la hiérarchie tout en maintenant le protocole dans un mode de mise à jour.

8. Procédé selon la revendication 1 ou la revendication 2, caractérisé en ce qu'on associe à chaque bloc du niveau intermédiaire de la hiérarchie un bit d'utilité (12) qui est mis dans un premier état lors d'une première copie d'information ou d'une mise à jour d'information dans ce bloc, et qui est mis dans un second état lors d'une utilisation de l'information contenue dans ce bloc, en ce qu'on associe à chaque adresse du niveau moins élevé de la hiérarchie un code (13) qui évolue en fonction d'une utilité d'une mise à jour lorsque les copies des informations contenues dans les blocs du niveau intermédiaire de la hiérarchie sont traitées selon un protocole dans un mode de mise à jour, ou en fonction d'une nature d'un échec lorsque les copies des informations contenues dans les blocs du niveau intermédiaire de la hiérarchie sont traitées selon un protocole dans un mode d'invalidation, l'utilité d'une mise à jour étant déterminée en fonction de l'état dans lequel se trouvent les bits d'utilité, et la nature d'un échec étant déterminée par une absence totale d'information et d'adresse dans la mémoire du niveau intermédiaire de la hiérarchie ou par une information invalide dans un bloc de cette mémoire, et en ce qu'on fait évoluer le mode du protocole en fonction du code de l'adresse considérée du niveau moins élevé de la hiérarchie.

9. Procédé selon la revendication 8, caractérisé en ce qu'on mémorise au niveau le moins élevé un seuil de mise à jour et en ce que l'utilité d'une mise à jour est mesurée en comparant au seuil un pourcentage des bits d'utilité dans le second état.

10. Procédé selon la revendication 8, caractérisé en ce qu'on mémorise au niveau le moins élevé un premier seuil et un second seuil et on fait évoluer le code en fonction d'un nombre réel de bits d'utilité dans le premier et le second état par comparaison au premier et au second seuil.

## Patentansprüche

1. Verfahren zur kohärenten Steuerung des Datenaustausches zwischen Ebenen einer Speicherhierarchie, die wenigstens eine Zwischenebene der Hierarchie enthält, die mit einer höheren Ebene der Hierarchie und mit einer niedrigeren Ebene der Hierarchie verbunden ist, wobei jede Ebene der Hierarchie in Speicher (3, 5, 6) unterteilt ist, die ihrerseits in Blöcke (10) unterteilt sind, die Informationen (11) enthalten, die Adressen (Ad) zugeordnet sind, wobei die Speicherblöcke der höheren Ebene und der Zwischenebene der Hierarchie Kopien von Informationen enthalten, die in Blöcken mit entsprechenden Adressen der niedrigeren Ebene der Hierarchie gehalten werden, dadurch gekennzeichnet, daß bei einer Modifikation einer Information in einem Block (10.32) eines Speichers der höheren Ebene der Hierarchie wenigstens ein Teil der Informationen mit entsprechenden Adressen in anderen Speichern der höheren Ebene der Hierarchie ungültig gemacht wird und ein Aktualisieren oder ein Invalidieren von Informationen an entsprechenden Adressen der Speicher der Zwischenebene und der niedrigeren Ebene der Hierarchie in Abhängigkeit von einer Nützlichkeit des Aktualisierens gesteuert wird.

2. Verfahren nach Anspruch 1 in Verbindung mit einer Datenverarbeitungseinheit, in der die Speicher auf verschiedenen Ebenen der Hierarchie in Knoten gruppiert sind, dadurch gekennzeichnet, daß bei einer Modifikation einer Information in einem Block (10.32) eines Speichers der höheren Ebene der Hierarchie die Blöcke (10.31) mit entsprechenden Adressen in Speichern der höheren Ebene der Hierarchie des Knotens (1.3), zu dem der modifizierte Block gehört, aktualisiert werden, und die Blöcke (10.11; 10.22) mit entsprechenden Adressen der Speicher der höheren Ebene der Hierarchie in anderen Knoten (1.1, 1.2) ungültig gemacht werden.

3. Verfahren nach Anspruch 1 oder Anspruch 2, bei dem die Kopien von Informationen, die in den Blöcken mit entsprechenden Adressen der Zwischenebene der Hierarchie gehalten werden, normalerweise gemäß einem Protokoll in einer Aktualisierungsbetriebsart verarbeitet werden, dadurch gekennzeichnet, daß jedem Block der Zwischenebene der Hierarchie ein Nützlichkeitsbit (12) zugeordnet wird, das bei einem ersten Kopieren einer Information oder bei einer Aktualisierung einer Information in diesem Block in einen ersten Zustand versetzt wird und bei einer Nutzung der in diesem Block enthaltenen Information in einen zweiten Zustand versetzt wird, und daß bei einer Modifikation einer Information mit einer Adresse der niedrigeren Ebene der Hierarchie Blöcke mit der entsprechenden Adresse der Zwischenebene der Hierarchie aktualisiert werden und das Verarbeitungsprotokoll in Abhängigkeit von der Nützlichkeit einer vorangehenden Aktualisierung bei dieser Adresse in der Aktualisierungsbetriebsart beibehalten wird oder in eine Invalidierungsbetriebsart gesteuert wird, wobei die Nützlichkeit einer vorangehenden Aktualisierung in Abhängigkeit von dem Zustand bestimmt wird, in dem sich die Nützlichkeitsbits der Blöcke derselben Adresse direkt vor der betrachteten Aktualisierung befunden haben.

4. Verfahren nach Anspruch 3, dadurch gekennzeichnet, daß auf der niedrigeren Ebene eine Aktualisierungsschwelle gespeichert wird und daß das Protokoll in der Aktualisierungsbetriebsart gehalten wird, wenn ein Prozentsatz der Nützlichkeitsbits im zweiten Zustand wenigstens gleich der Aktualisierungsschwelle ist, und das Protokoll in die Invalidierungsbetriebsart gesteuert wird, wenn der Prozentsatz der Nützlichkeitsbits im zweiten Zustand kleiner als die Aktualisierungsschwelle ist.

5. Verfahren nach Anspruch 3, dadurch gekennzeichnet, daß auf der niedrigeren Ebene der Hierarchie eine erste Schwelle und eine zweite Schwelle gespeichert werden und das Verarbeitungsprotokoll in Abhängigkeit von einer reellen Zahl von Nützlichkeitsbits im ersten und im zweiten Zustand durch Vergleichen mit der ersten bzw. mit der zweiten Schwelle in der Aktualisierungsbetriebsart gehalten wird oder in eine Invalidierungsbetriebsart gesteuert wird.

6. Verfahren nach Anspruch 5, dadurch gekennzeichnet, daß das Protokoll in die Invalidierungsbetriebsart gesteuert wird, wenn die Anzahl von Nützlichkeitsbits im zweiten Zustand kleiner als die zweite Schwelle ist.

7. Verfahren nach Anspruch 6, dadurch gekennzeichnet, daß dann, wenn die Anzahl von Nützlichkeitsbits im ersten Zustand und die Anzahl von Nützlichkeitsbits im zweiten Zustand größer als die erste bzw. die zweite Schwelle ist, eine punktweise Invalidierung von Informationen in den Blöcken der höheren Ebene der Hierarchie ausgeführt wird und dabei das Protokoll in der Aktualisierungsbetriebsart gehalten wird.

8. Verfahren nach Anspruch 1 oder Anspruch 2, dadurch gekennzeichnet, daß jedem Block der Zwischenebene der Hierarchie ein Nützlichkeitsbit (12) zugeordnet wird, das in einen ersten Zustand versetzt wird, wenn ein erstes Kopieren einer Information oder eine Aktualisierung einer Information in diesem Block erfolgt, und in einen zweiten Zustand versetzt wird, wenn die in diesem Block enthaltene Information verwendet wird, daß jeder Adresse der niedrigeren Ebene der Hierarchie ein Code (13) zugeordnet wird, der sich in Abhängigkeit von einer Nützlichkeit einer Aktualisierung entwickelt, wenn die Kopien von in den Blöcken der Zwischenebene der Hierarchie enthaltenen Informationen gemäß einem Protokoll in einer Aktualisierungsbetriebsart verarbeitet werden, oder sich in Abhängigkeit von einer Fehlerart entwickelt, wenn die Kopien der in den Blöcken der Zwischenebene der Hierarchie enthaltenen Informationen gemäß einem Protokoll in einer Invalidierungsbetriebsart verarbeitet werden, wobei die Nützlichkeit einer Aktualisierung in Abhängigkeit von dem Zustand, in dem sich die Nützlichkeitsbits befinden, bestimmt wird und wobei die Fehlerart durch das vollständige Fehlen von Informationen und von Adressen im Speicher der Zwischenebene der Hierarchie oder durch eine ungültige Information in einem Block dieses Speichers bestimmt wird, und daß die Betriebsart des Protokolls in Abhängigkeit vom Code der betrachteten Adresse der niedrigeren Ebene der Hierarchie entwickelt wird.

9. Verfahren nach Anspruch 8, dadurch gekennzeichnet, daß auf der niedrigsten Ebene eine Aktualisierungsschwelle gespeichert wird und daß die Nützlichkeit einer Aktualisierung gemessen wird, indem ein Prozentsatz der Nützlichkeitsbits im zweiten Zustand mit der Schwelle verglichen wird.

10. Verfahren nach Anspruch 8, dadurch gekennzeichnet, daß auf der niedrigsten Ebene eine erste Schwelle und eine zweite Schwelle gespeichert werden und daß der Code in Abhängigkeit von einer reellen Zahl von Nützlichkeitsbits im ersten Zustand und im zweiten Zustand durch Vergleichen mit der ersten bzw. mit der zweiten Schwelle entwickelt wird.

## Claims

1. Method for consistent management of exchanges between levels of a hierarchy of memories comprising at least one intermediate level of the hierarchy, connected to a higher level of the hierarchy and a lower level of the hierarchy, each level of the hierarchy being divided into memories (3, 5, 6) themselves divided into blocks (10) containing information (11) associated with addresses (Ad), the blocks of the memories at the higher level and the intermediate level of the hierarchy containing copies of the information held in blocks at corresponding addresses of the lower level of the hierarchy, characterised in that, when there is a modification of information in a block (10.32) of a memory at the higher level in the hierarchy, at least part of the information at the corresponding addresses of other memories at the higher level of the hierarchy is invalidated, and updating or invalidation of the information at the corresponding addresses of the memories at the intermediate level and the lower level of the hierarchy are managed as a function of an updating utility.

2. Method according to Claim 1 in connection with a computer assembly in which the memories at different levels in the hierarchy are grouped according to nodes, characterised in that when a modification is made to information in a block (10.32) of a memory at the higher level of the hierarchy, the blocks (10.31) are updated at corresponding addresses of the memories at the higher level of the hierarchy of the node (1.3) to which the modified block belongs, and the blocks (10.11; 10.22) are invalidated at corresponding addresses of the memories at the higher level of the hierarchy in other nodes (1.1, 1.2).

3. Method according to Claim 1 or Claim 2, in which the copies of information held in blocks at corresponding addresses of the intermediate level of the hierarchy are normally processed according to a protocol in an update mode, characterised in that each block at the intermediate level of the hierarchy is associated with a utility bit (12), which is put into a first status during a first copy of information or during an up-date of information in this block, and which is put into a second status during use of the information contained in this block, and in that, during a modification of information at an address at the lower level of the hierarchy, the blocks at the corresponding address at the intermediate level of the hierarchy are updated and the processing protocol is maintained in the update mode or it is commanded in an invalidation mode, as a function of a previous updating utility at this address, this previous updating utility being determined as a function of the status that the utility bits of the blocks of the same address are in just prior to the update in question.

4. Method according to Claim 3, characterised in that an updating threshold is stored at the lower level and that the protocol is maintained in the update mode when a percentage of utility bits in the second status is at least equal to the updating threshold, and the protocol is commanded in the invalidation mode when the percentage of utility bits in the second status is lower than the updating threshold.

5. Method according to Claim 3, characterised in that a first threshold and a second threshold are stored at the lower level of the hierarchy, and the processing protocol is maintained in the updating mode or it is commanded in an invalidation mode as a function of an actual number of utility bits in the first and second status by comparison with the first and second threshold.

6. Method according to Claim 5, characterised in that the protocol is commanded in the invalidation mode when the number of utility bits in the second status is below the second threshold.

7. Method according to Claim 6, characterised in that when the numbers of utility bits in the first and second status are respectively above the first and second threshold, *ad hoc* invalidation of the information in the blocks at the higher level of the hierarchy is carried out while maintaining the protocol in an update mode.

8. Method according to Claim 1 or Claim 2, characterised in that each block of the intermediate level of the hierarchy is associated with a utility bit (12), which is placed in a first status during a first copy of information or during an up-date of information in this block, and which is placed in a second status during use of the information contained in this block, in that each address at the lower level of the hierarchy is associated with a code (13), which evolves as a function of an update utility when the copies of the information contained in the blocks at the intermediate level of the hierarchy are processed according to a protocol in an update mode, or as a function of a nature of failure when the copies of the information contained in the blocks at the intermediate level of the hierarchy are processed according to a protocol in an invalidation mode, the update utility being determined as a function of the status that the utility bits are in, and the nature of a failure being determined by a total absence of information and address in the memory at the intermediate level of the hierarchy or by an invalid item of information in a block of this memory, and in that the mode of the protocol is caused to evolve as a function of the code of the relevant address at the lower level of the hierarchy.

9. Method according to Claim 8, characterised in that an updating threshold is stored at the lower level and in that the update utility is measured by comparing with the threshold a percentage of the utility bits in the second status.

10. Method according to Claim 8, characterised in that a first threshold and a second threshold are stored at the lower level and the code is caused to evolve as a function of an actual number of utility bits in the first and second status by comparison with the first and second threshold.
